Europäisches Patentamt

European Patent Office

Office européen des brevets

(19)

(11) Veröffentlichungsnummer: **0 072 897**

**A1**

(12) # EUROPÄISCHE PATENTANMELDUNG

(21) Anmeldenummer: 82105366.7

(22) Anmeldetag: 18.06.82

(51) Int. Cl.$^3$: **C 01 B 6/21**

(30) Priorität: 28.08.81 CH 5549/81

(43) Veröffentlichungstag der Anmeldung:
02.03.83 Patentblatt 83/9

(84) Benannte Vertragsstaaten:
AT BE CH DE FR GB IT LI NL

(71) Anmelder: F. HOFFMANN-LA ROCHE & CO.
Aktiengesellschaft

CH-4002 Basel(CH)

(72) Erfinder: Pauling, Horst, Dr.
Ruchholzstrasse 39
CH-4103 Bottmingen(CH)

(72) Erfinder: Wehrli, Christof
Rheinstrasse 40
CH-4127 Birsfelden(CH)

(74) Vertreter: Cottong, Norbert A. et al,
Grenzacherstrasse 124 Postfach 3255
CH-4002 Basel(CH)

(54) Verfahren zur Herstellung eines Reduktionsmittels.

(57) Es wird eine neues Verfahren zur Herstellung von Lithiumborhydrid beschrieben. Hierbei wird Natriumborhydrid mit Lithiumchlorid oder Lithiumbromid in einem geeigneten Lösungsmittel umgesetzt, wobei die Umsetzung unter fortwährender Anrechterhaltung einer frischen, reaktionsfähigen Oberfläche des Natriumborhydrids erfolgt.

EP 0 072 897 A1

**0072897**

RAN 6200/007


## Verfahren zur Herstellung eines Reduktionsmittels


Die vorliegende Erfindung betrifft ein neues Verfahren zur Herstellung von Lithiumborhydrid.

Lithiumborhydrid ist ein seit langem bekanntes und im Labormasstab häufig verwendetes Reduktionsmittel. In grösserem Masstab ist es bisher allerdings kaum zum Einsatz gelangt und zwar insbesondere auf Grund des verhältnismässig hohen Preises, sowie auch im Hinblick auf die Tatsache, dass die Lösungsmittel in denen es bisher hergestellt wurde, sich im allgemeinen nicht für Nachfolgereaktionen, d.h. Reduktionen mittels Lithiumborhydrid eignen. So wurde Lithiumborhydrid bisher beispielsweise durch Umsetzung des relativ teuren Kaliumborhydrids mit Lithiumchlorid oder Lithiumbromid entweder in ätherischen Lösungsmitteln oder aus dem billigen Natriumborhydrid beispielsweise in Isopropylamin hergestellt. Diese Lösungsmittel haben zwar den Vorteil, dass alle Reaktionsteilnehmer und das Endprodukt darin löslich sind. Sie haben aber auch den Nachteil, dass die Isolierung des erhaltenen Lithiumborhydrids schwierig ist und Spuren vom Lösungsmittel mit vertretbarem Aufwand praktisch nicht entfernbar sind. Zudem sind diese Lösungsmittel für viele Folgereaktionen

Cot/21.4.1982

ungeeignet, was somit auch die Herstellung des Lithiumborhydrids in situ ausschliesst. Das gleiche gilt für eine
andere Gruppe von Lösungsmitteln, nämlich hochsiedende
Polyäther wie z.B. Diglyme oder Triglyme und dergleichen.
Weiterhin wurden auch bereits Alkohole als Lösungsmittel
verwendet, wobei wiederum der Vorteil darin liegt, dass
alle Reaktionspartner und das Endprodukt darin gut löslich
sind. Der Nachteil liegt in diesem Fall jedoch darin, dass
das entstehende Lithiumborhydrid in Alkoholen nicht stabil
ist.

Da weiterhin bekannt ist, dass Lithiumborhydrid an
feuchter Luft selbstentzündlich ist und somit nicht gut
lagerfähig ist, wurde auch bereits versucht, dieses Reduktionsmittel in für Folgereaktionen geeigneten Lösungsmitteln in situ herzustellen. Der Nachteil dieser Methode
liegt wiederum darin, dass unter gewöhnlichen Reaktionsbedingungen das schwerlösliche Natriumborhydrid in derartigen Lösungsmitteln, z.B. Tetrahydrofuran, nur langsam
und unvollständig mit Lithiumchlorid oder Lithiumbromid
zum gewünschten Lithiumborhydrid reagiert.

Es bestand somit ein Bedürfnis nach einem Verfahren
gemäss welchem es möglich ist Lithiumborhydrid in praktisch
quantitativer Ausbeute und in reiner Form zu erhalten,
beziehungsweise in einem Lösungsmittel in situ herzustellen, in welchem auch Nachfolgereaktionen gut durchführbar sind.

Erfindungsgemäss ist dies nunmehr dadurch gelungen,
dass man die Umsetzung des Natriumborhydrids mit Lithiumchlorid oder Lithiumbromid in einem geeigneten organischen
Lösungsmittel unter fortwährender Aufrechterhaltung einer
frischen, reaktionsfähigen Oberfläche des Natriumborhydrids durchführt.

Diese Reaktion kann nunmehr in Lösungsmitteln durchgeführt werden, aus welchen das Lithiumborhydrid leicht und in reiner Form isoliert werden kann, beziehungsweise welche sich gut für Folgereaktionen eignen und worin somit das Lithiumborhydrid in situ hergestellt werden kann und nicht isoliert werden muss.

Für die Zwecke der vorliegenden Erfindung besonders geeignete Lösungsmittel sind niedrig siedende Aether und zwar sowohl aliphatische als auch cyclische Aether. Bevorzugte aliphatische Aether sind niedere Alkyläther mit 1 bis 4 Kohlenstoffatomen, wobei die Alkylreste geradkettig oder verzweigt sein können. Es können normale und auch gemischte Aether verwendet werden. Als Beispiele derartiger Aether können genannt werden: Dimethyläther, Diäthyläther, Dipropyläther, Methyläthyläther, Methylpropyläther, Diisopropyläther und dergleichen. Weiterhin kann Monoglyme in diesem Zusammenhang genannt werden. Bevorzugte cyclische Aether sind 5- und 6-gliedrige Ringe wie Tetrahydrofuran und Dioxan. Bevorzugte Aether sind in dem erfindungsgemässen Verfahren Diäthyläther, Tetrahydrofuran, Dioxan und Monoglyme.

Die fortwährende Aufrechterhaltung einer frischen, reaktionsfähigen Oberfläche des Natriumborhydrids kann auf verschiedene Art und Weise erreicht werden. Zweckmässig erfolgt dies unter Anwendung von Prall- und/oder Scherkräften, welche in geeigneter Weise mittels schnellaufender Rüher oder Turbinenmischer oder auch durch Vermahlen unter Verwendung von Kugeln aus einem inerten Material, wie etwa Glas, Eisen, Keramik und dergleichen. Bei der Verwendung von schnellaufenden Rührern oder Turbinenmischern, ist der erzielte Effekt umso grösser, je grösser die Umdrehungsgeschwindigkeit. Eine geeignete Geschwindigkeit hierbei beträgt etwa 1000-3000 Umdrehungen/Minute. Die Verwendung von Kugeln ist insbesondere bei Verwendung von langsamlaufenden Rührern angezeigt.

Die Temperatur bei welcher die erfindungsgemässe Umsetzung erfolgt ist nicht kritisch, da sie im wesentlichen lediglich die Reaktionsdauer beeinflusst. Geeignet sind Temperaturen zwischen etwa 0°C und etwa 100°C, vorzugsweise Temperaturen von etwa Raumtemperatur bis etwa 70°C. Der Druck ist bei dieser Umsetzung ebenfalls keine kritische Grösse und es wird bevorzugt bei Normaldruck gearbeitet.

Zweckmässig wird die Umsetzung unter Ausschluss von Feuchtigkeit und von Sauerstoff durchgeführt, vorzugsweise unter Inertgas, wie etwa Stickstoff, Argon und dergleichen.

Die Umsetzung wird zweckmässig unter Verwendung stöchiometrischer Mengen des Natriumborhydrids und Lithiumchlorid oder Lithiumbromid durchgeführt. Vorzugsweise wird jedoch das Lithiumchlorid oder das Lithiumbromid im Ueberschuss verwendet. Ein Ueberschuss bis etwa 15%, insbesondere ein Ueberschuss von etwa 5 bis etwa 10 Mol % bezogen auf des eingesetzte Natriumborhydrid ist besonders bevorzugt.

## Beispiel

In einen 200 ml Vierhalskolben, versehen mit Thermometer, Tropftrichter, Glasrührer mit 400 Umdrehungen/Minute und Argonbegasung, werden 15 g Glaskugeln (Ø 5mm) gegeben. Dann werden unter Argon 0,76 g (20 mMol) Natriumborhydrid, 0,89 g (21 mMol) Lithiumchlorid und 11 ml wasserfreiem Tetrahydrofuran zugegeben. Die Suspension wird 18 Stunden bei Raumtemperatur in einer Argonatmosphäre gerührt. Die Suspension wird anschliessend unter Argon über eine getrocknete P3 Glassinternutsche abgenutscht. Der Rückstand wird 2 X mit 20 ml wasserfreiem Tetrahydrofuran gewaschen. Das Filtrat wird bei 50°C und 13 mm Hg eingeengt und auschliessend 4 Stunden bei 90°C und 0,2 mm Hg bis zur Gewichtskonstanz getrocknet. Man erhält 0,42 g Lithiumborhydrid, entsprechend 96% der Theorie.

## Patentansprüche

1. Verfahren zur Herstellung von Lithiumborhydrid durch Umsetzen von Natriumborhydrid mit Lithiumchlorid oder Lithiumbromid in einem organischen Lösungsmittel, dadurch gekennzeichnet, dass die Umsetzung unter fortwährender Aufrechterhaltung einer frischen, reaktionsfähigen Oberfläche des Natriumborhydrids durchgeführt wird.

2. Verfahren nach Anspruch 1, dadurch gekennzeichnet, dass eine frische, reaktionsfähige Oberfläche des Natriumborhydrids unter Anwendung von Prall- und/oder Scherkräften aufrecht erhalten wird.

3. Verfahren nach Anspruch 1 oder 2, dadurch gekennzeichnet, dass eine frische, reaktionsfähige Oberfläche des Natriumborhydrids durch Rühren in Gegenwart von Kugeln aus einem inerten Material aufrecht erhalten wird.

4. Verfahren nach einem der Ansprüche 1 bis 3, dadurch gekennzeichnet, dass man die Umsetzung in einem niedrig siedenden Aether durchführt.

5. Verfahren nach Anspruch 4, dadurch gekennzeichnet, dass als Aether Diäthyläther, Tetrahydrofuran, Dioxan oder Monoglyme verwendet wird.

6. Verfahren nach einem der Ansprüche 1 bis 5, dadurch gekennzeichnet, dass man die Umsetzung mit einem bis etwa 15%igen, vorzugsweise mit einem etwa 5 bis 10Mol %igen Ueberschuss an Lithiumchlorid oder Lithiumbromid durchführt.

\*\*\*

| | Europäisches Patentamt | EUROPÄISCHER RECHERCHENBERICHT | 0072897 Nummer der Anmeldung |
|---|---|---|---|
| | | | EP 82 10 5366 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | C 01 B 6/21 |
| X | FR-A-1 046 081 (RHONE-POULENC) * Seite 1, linke Spalte, Zeilen 30-37; rechte Spalte, Zeilen 3-7, Zeile 37 - Seite 2, linke Spalte, Zeile 8 * | 1,4-6 | |
| | --- | | |
| X | FR-A-1 492 705 (METALLGESELLSCHAFT) * Seite 3, linke Spalte, Beispiel 1 * | 1 | |
| | --- | | |
| X | US-A-3 151 930 (BRAGDON et al.) * Spalte 3, Beispiel 1 * | 1 | |
| | ----- | | |

|  | RECHERCHIERTE SACHGEBIETE (Int. Cl. ³) |
|---|---|
| | C 01 B 6/19 |

Der vorliegende Recherchenbericht wurde für alle Patentansprüche erstellt.

| Recherchenort DEN HAAG | Abschlußdatum der Recherche 30-11-1982 | Prüfer VAN BELLINGEN I. |
|---|---|---|